# EUROPÄISCHE PATENTANMELDUNG

(11) **EP 0 529 276 A1**
(43) Veröffentlichungstag der Anmeldung: **03.03.1993**
(21) Anmeldenummer: 92112161.2
(22) Anmeldetag: 16.07.1992
(51) Int. Cl.: A61C 13/30

(54) **Zahnwurzelstift**

(30) Priorität: 30.08.1991 DE 4128838
(71) Anmelder: MAN Ceramics GmbH, 94453 Deggendorf (DE)
(72) Erfinder: Werner, Heinz Helmut, Dr., W-3508 Melsungen (DE)

(57) **Zusammenfassung**

Es wird ein Zahnwurzelstift (12) aus kohlenstoffaserverstärktem Kunststoff vorgeschlagen. Damit wird die bei den bisher eingesetzten Metallstiften verursachten Röntgenstrahlenstreuung vermieden.

## Beschreibung

Die Erfindung bezieht sich auf einen Zahnwurzelstift, der zur Abdichtung eines Zahnwurzelkanals nach einer Zahnwurzelspitzenresektion verwendet wird.

Zahnwurzelstifte bestehen aus relativ dünnen, leicht konisch zugespitzten Drähten aus Silber-oder Titanlegierungen mit einem stecknadelkopfähnlichem Ende. Stifte dieser Art sind bis zu einem gewissen Grad plastisch, so daß der Stift ohne hohem Druck auszuüben, sich dem oft bogenförmigen Zahnkanal anpaßt.

Die bisher bekannten Stifte bestehen aus Metall. Sie haben den Nachteil, daß Metallionen in das biologische Gewebe abgegeben werden. Hierdurch können Entzündungen und Verfärbungen verursacht werden.

Der Erfindung liegt daher die Aufgabe zugrunde, einen Zahnstift zu entwickeln, der die genannten Nachteile nicht aufweist.

Die Aufgabe wird erfindungsgemäß durch die Merkmale des Anspruchs 1 gelöst.

Mit dem faserverstärkten Kunststoff ist es möglich, sehr dünne Stifte mit ausreichender Festigkeit herzustellen, die eine einwandfreie Einführung des Stiftes in den Wurzelkanal ermöglicht und wobei keine negativen Auswirkungen auf Röntgenaufnahmen erfolgen. Es hat sich überraschenderweise heraugestellt, daß sie ohne der sonst gewünschten Plastizität ihre Funktion zur Abdichtung des Wurzelkanals gut erfüllen.

Als Fasern werden vorzugsweise körperverträgliche Kohlenstoffasern verwendet, die in einem biokompatiblen Matrixmaterial bekannter Art eingebettet sind.

Eine Anpassung aus den Zahnkanal erfolgt trotz der Steifigkeit von C-Fasern, indem der Stift aufgrund des geringen Durchmessers ohne nennenswerten Druck auf die Zahnwandung den Kanalkrümmungen folgen kann.

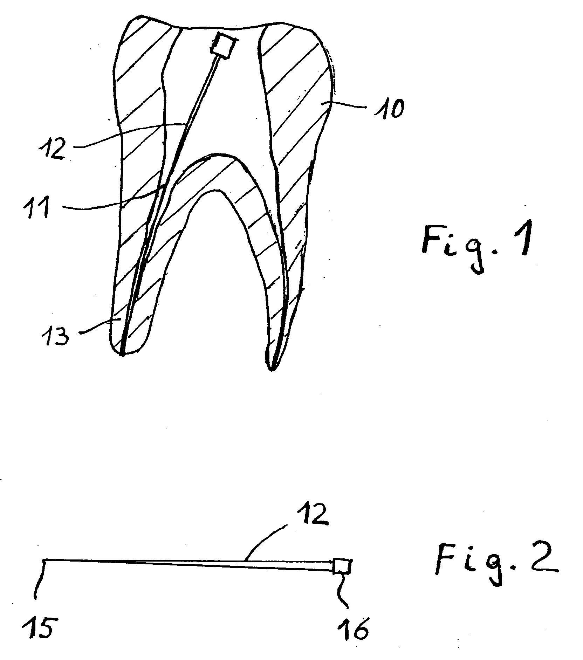

In der Zeichnung ist ein Ausführungsbeispiel der Erfindung schematisch dargestellt, wobei Fig. 1 einen Zahn 10 im Längsschnitt zeigt, in dessen Wurzelkanal 11 ein Zahnwurzelstift 12 steckt, der den Wurzelkanal 11 nach einer durchgeführten Resektion der Zahnwurzelspitze 13 abdichtet.

Der Zahnwurzelstift 12 besteht in einem nadelähnlichen langen Stift, mit einem spitzen Ende 15, das in den Wurzelkanal 11 eingeführt wird und mit einem Stiftkopf 16 am anderen Ende zur Handhabung des Stiftes 12. Der Stift 12 ist ausgehend von der Spitze 15 sich konisch erweiternd geformt. Der Zahnwurzelstift 12 wird aus längsgerichteten, mit einem Matrixaterial imprägnierten Fasern, insbesondere Kohlenstoffasern, hergestellt. Aus den Fasern wird ein dünner Zylinder mit einem Durchmesser des Stiftkopfes 16 gebildet, der anschließend durch mechanische Bearbeitung in die endgültige Formgebung, wie in Fig. 2 dargestellt, gebracht wird.

Wegen der guten Verträglichkeit der CFK-Stifte ist es im Gegensatz zu den Metallstiften möglich, den Stift tiefer bis in den Knochen hineinzubringen. Damit erhält der verbleibende Zahn eine höhere mechanische Stabilität und bietet für die nachfolgende prothetische Versorgung eine bessere Grundlage.

## Patentansprüche

1. Zahnwurzelstift, dadurch gekennzeichnet, daß der Stift (12) aus faserverstärktem Kunststoff besteht.

2. Zahnwurzelstift nach Anspruch 1, dadurch gekennzeichnet, daß die Fasern Kohlenstofffasern sind.
